# EUROPÄISCHE PATENTSCHRIFT

(11) **EP 3 359 913 B1**
(45) Veröffentlichungstag und Bekanntmachung des Hinweises auf die Patenterteilung: **13.05.2020**
(21) Anmeldenummer: 16775740.0
(22) Anmeldetag: 05.10.2016
(51) Int. Cl.: G01B 21/04, G05B 19/4061, G01B 5/00

(54) **ÜBERWACHUNG EINES SICHERHEITSRELEVANTEN PARAMETERS EINES KOORDINATENMESSGERÄTS**
MONITORING A SAFETY-RELEVANT PARAMETER OF A COORDINATE MEASURING DEVICE
SURVEILLANCE D'UN PARAMÈTRE DE SÉCURITÉ D'UN APPAREIL DE MESURE DE COORDONNÉES

(30) Priorität: 05.10.2015 DE 102015116850
(43) Veröffentlichungstag der Anmeldung: 15.08.2018
(73) Patentinhaber: Carl Zeiss Industrielle Messtechnik GmbH, 73447 Oberkochen (DE)
(72) Erfinder: UHL, Peter, 73485 Unterschneidheim (DE); GRUPP, Günter, 89558 Böhmenkirch (DE); SAGEMÜLLER, Rainer, 73434 Aalen (DE)
(74) Vertreter: Witte, Weller & Partner Patentanwälte mbB
(86) Internationale Anmeldenummer: PCT/EP2016/073728
(87) Internationale Veröffentlichungsnummer: WO 2017/060268

(56) Entgegenhaltungen:
- DE-A1-102006 003 362
- DE-A1-102006 009 181

## Beschreibung

Die vorliegende Erfindung betrifft ein Koordinatenmessgerät und ein Verfahren zum sicheren Überwachen eine Parameters, insbesondere eines Massenträgheitsmoments oder einer Masse, der bzw. die zur Bestimmung einer Bewegungsenergie eines Objekts erforderlich ist, das mittels eines Sensors des Koordinatenmessgeräts vermessbar ist, wobei das Objekt zwischen verschiedenen Positionen bewegt wird, wobei das Objekt vorzugsweise an jeder der Positionen kurzzeitig in Ruhe ist.

Koordinatenmessgeräte sind allgemein bekannt. Mit Koordinatenmessgeräten werden Werkstücke mit unterschiedlichsten Abmessungen, und damit mit unterschiedlichsten Massen oder Massenträgheitsmomenten, vermessen. Die DE 101 24 493 A1 beschreibt ein exemplarisches Koordinatenmessgerät mit einem Messkopf, der innerhalb eines definierten Messvolumens relativ zu einem Werkstück bewegbar ist. Mit dem Messkopf werden definierte Messpunkte an einem Werkstück vermessen. Das Werkstück wird dazu relativ zum Messkopf in eine entsprechende Messposition gebracht. Häufig verfügt der Messkopf über einen Tastsensor, insbesondere in Form eines Taststifts mit einem kugelförmigen freien Ende, mit dem die gewünschten Messpunkte an dem Werkstück physisch berührt werden. Daher wird ein solcher Messkopf häufig als Tastkopf bezeichnet. Alternativ gibt es Messköpfe, mit denen definierte Messpunkte an einem Werkstück berührungslos vermessen werden können, insbesondere mit optischen Sensoren.

Eine Steuer- und Auswerteeinheit bestimmt aus der Position des Messkopfes innerhalb des Messvolumens und ggf. aus der Position des Tastsensors relativ zum Messkopf beim Antasten des Werkstücks Raumkoordinaten, die den angetasteten Messpunkt repräsentieren. Bestimmt man die Raumkoordinaten an einer Vielzahl von Messpunkten, kann man geometrische Eigenschaften des Werkstücks vermessen, wie etwa den Durchmesser einer Bohrung oder den räumlichen Abstand von zwei Geometrieelementen des Werkstücks. Darüber hinaus kann man mit einer Vielzahl von Raumkoordinaten Messkurven bestimmen, die die Raumform einzelner Geometrieelemente oder sogar die Raumform des gesamten Werkstücks repräsentieren. Häufig werden geometrische Abmessungen, wie etwa der Durchmesser einer Bohrung oder der Abstand zwischen zwei Geometrieelementen, erst anhand der Messkurven bestimmt. Diese Bestimmung kommt einem Scan-Vorgang gleich. Beim "Scanning" werden Messwerte während einer Bewegung übernommen. Der Tastsensor hat dabei Kontakt zum Werkstück, welches also angetastet ist.

Oft werden auch Drehtische eingesetzt, bei denen die Werkstücke nicht auf dem feststehenden Messtisch positioniert werden, sondern auf einer bewegten Achse aufgespannt werden. Während einer Drehung des Werkstücks (und der entsprechenden Werkstückaufnahme) ergibt sich in Abhängigkeit von einer Bewegungsgeschwindigkeit und einem Massenträgheitsmoment eine spezifische Rotationsenergie des gedrehten Objekts.

Aus Sicherheitsgründen, z.B. Personenschutz, darf diese Energie bestimmte Grenzwerte nicht überschreiten. Maschinenrichtlinien schreiben beispielsweise eine Obergrenze von 4J vor, die nicht überschritten werden darf. Anderenfalls würde im Kollisionsfall eine ernsthafte Verletzungsgefahr für eine Bedienperson bestehen. Ein Kollisionsfall liegt z.B. vor, wenn das Werkstück und/oder die Werkstückaufnahme ein Körperglied der Bedienperson während einer Bewegung streift oder einklemmt.

Daraus ergibt sich das folgende Problem. Da eine Masse bzw. ein Massenträgheitsmoment eines zu vermessenden Werkstücks im Voraus üblicherweise nicht bekannt ist, muss vom ungünstigsten, aber eigensicheren Fall ausgegangen werden. Dies bedeutet, dass eine Maximalgeschwindigkeit, mit der das Werkstück und/oder die Werkstückaufnahme bewegt werden dürfen, auf Basis einer größtmöglichen bewegbaren Masse bzw. eines entsprechenden Massenträgheitsmoments festgelegt wird. Dies hat zur Folge, dass leichtere Werkstücke unnötig langsam bewegt werden. Da viele Endnutzer meistens leichtere Werkstücke vermessen, sinkt eine Messleistung des Koordinatenmessgeräts erheblich.

Ein bekanntes Sicherheitsmerkmal ist in einer Abschrankung des Messvolumens mit Lichtschranken oder in der Verwendung von Trittmatten zu sehen. Wenn eine der Lichtschranken unterbrochen wird, wird eine aktuelle Bewegungsgeschwindigkeit auf ein ungefährliches Niveau reduziert. Derartige Lösungen sind teuer, da die Abschrankung je nach Bauart des Koordinatenmessgeräts auf bis zu fünf Geräteseiten erfolgen muss. Des Weiteren wird ein Arbeitsbereich des Koordinatenmessgeräts unnötig vergrößert, da die Lichtschranken in einer vorbestimmten Entfernung zum Werkstück installiert werden müssen, damit das Werkstück noch gebremst werden kann, bis die Bedienperson nach einem Durchbrechen der Lichtschranken das Werkstück erreicht. Außerdem bleibt bei der Verwendung von Lichtschranken noch ein gewisses Restrisiko, da sich die Bedienperson ggf. auch von den Lichtschranken "einschließen" lassen kann, indem das Koordinatenmessgerät z.B. von zwei Bedienpersonen bedient wird. Weiterhin sind Sicherheitseinrichtungen wie z.B. Lichtschranken oder Trittmatten lästig, weil das Koordinatenmessgerät ständig seine Geschwindigkeit ändert, was sich negativ auf Scan-Vorgänge auswirken kann.

Bekannt ist auch, dass die Masse automatisch über Luftdrucklager bestimmt wird, wie es z.B. in dem Dokument DE 100 06 876 C1 offenbart ist.

Oftmals enthalten auch Bedienungsanleitungen der Koordinatenmessgeräte Tabellen oder Formeln, die zu einer initialen Grobbestimmung der Geschwindigkeit auf Basis einer Werkstückmasse benutzt werden können. Bei diesem Sicherheitskonzept ergibt sich das Problem eines vorhersehbaren Missbrauchs oder Fehlers, da das Massenträgheitsmoment häufig unbekannt ist.

Das Dokument DE 10 2006 009 181 A1 betrifft die sichere Überwachung der Geschwindigkeit einer beweglichen Koordinatenmesseinrichtung. Ein erster Wert der Geschwindigkeit wird aus Messwerten des Koordinatenmesssystems berechnet, wobei die Messwerte Informationen über Positionen der Koordinatenmesseinrichtung aufweisen und wobei die Messwerte außerdem zur Bestimmung der Koordinaten eines Messobjekts verwendet werden. Ein zweiter Wert der Geschwindigkeit wird aus Messsignalen zumindest eines zusätzlichen Bewegungssensors ermittelt, wobei die Messsignale außerdem bei der Regelung einer Antriebseinrichtung der Koordinatenmesseinrichtung verwendet werden können. Ein Fehlersignal kann erzeugt werden, wenn der erste Wert und/oder der zweite Wert gemäß einem vordefinierten Kriterium voneinander, von einem Sollwert und/oder von einem Grenzwert abweichen.

Es ist daher eine Aufgabe der vorliegenden Erfindung ein Koordinatenmessgerät sowie ein Verfahren zum sicheren Überwachen eines Parameters bereitzustellen, der ein Maß für die Bewegungsenergie des bewegten Objekts repräsentiert.

Diese Aufgabe wird gelöst durch ein Verfahren zum sicheren Überwachen eines Parameters gemäß Anspruch 1.

Der Parameter wird kontinuierlich abgefragt, nämlich bei jeder Bewegung des Werkstücks bzw. des Objekts. Ändert sich der Parameter gegenüber einer früheren Einstellung, können sofort Maßnahmen ergriffen werden, die die (Arbeits-)Sicherheit gewährleisten, ohne dass aufwendige und zusätzliche Sicherheitsmerkmale, wie z.B. Lichtschranken, vorgesehen werden müssen. Die Änderung des Parameters kann absichtlich oder unabsichtlich herbeigeführt werden. Eine absichtliche Änderung liegt vor, wenn die Bedienperson z.B. eine Fahrt mit einem leichteren Werkstück durchführt und später ein schwereres Werkstück einspannt, um das schwerere Werkstück mit einer höheren Geschwindigkeit zu bewegen, als es zulässig ist. Eine unabsichtliche Änderung könnte vorliegen, wenn ein Stück des Werkstücks während einer Messung wegbricht. In diesem Fall verringert sich die Masse des Werkstücks, was der Bedienperson mitgeteilt werden kann, aber nicht zwingend zum Abbruch der Messung führen muss, weil sich die kinetische Energie des Werkstücks ja verringert.

Das Koordinatenmessgerät kann ohne zusätzliche Sensoren (z.B. Lichtgitter) dennoch sicher betrieben werden, indem man beispielsweise den Motorstrom während einer Relativbewegung des Objekts überwacht und daraus das Massenträgheitsmoment berechnet. Dies ist über den Zusammenhang M=J^{∗}α möglich, wobei M das Drehmoment ist, mit dem das Objekt (Werkstück) und die drehbeweglichen Bauteile der Objektauflage des Drehtisches (beispielsweise Rotor, Planscheibe und Werkstückaufspannung bzw. - aufnahme) drehbeschleunigt werden, wobei J das entsprechende Massenträgheitsmoment des Objektes und der beweglichen Bauteile der Objektauflage des Drehtisches und wobei α die entsprechende Winkelbeschleunigung bezeichne. Aus dem Motorstrom kann das Drehmoment M ermittelt werden und aus der zweifachen zeitlichen Ableitung der Werte des Winkelencoders des Drehtisches die Winkelbeschleunigung a, sodass hierdurch das Massenträgheitsmoment J berechnet werden kann. Analog kann für den translatorischen Fall die Masse m des Objektes (Werkstück) und der beweglichen Bauteile der Objektauflage (z.B. bewegter Messtisch und Werkstückaufspannung) über den Zusammenhang F=m^{∗}a ermittelt werden, wobei F die Kraft ist, mit der das Objekt und die beweglichen Teile der Objektauflage beschleunigt werden und a die zugehörige Beschleunigung bezeichnet. Aus dem Motorstrom kann die Kraft F bestimmt werden, während aus der zweifachen zeitlichen Ableitung der Maßstabswerte der Objektauflage des Objektes die Beschleunigung a ermittelt werden kann.

Bei einer Ausgestaltung weist das Verfahren ferner die Schritte auf: Auswählen eines Parameterbereichs, der einen erwarteten Parameterwert umfasst, durch eine Bedienperson des Koordinatenmessgeräts aus einer Vielzahl von Parameterbereichen, bevor der Schritt b) durchgeführt wird, wobei eine Gesamtheit aller Parameterbereiche jeden Parameterwert umfasst, der theoretisch möglich und praktisch zulässig ist, und wobei der Schritt des Auswählens vorzugsweise durch Betätigen eines Wahlschalters des Koordinatenmessgeräts erfolgt.

Die Auswahl und Festlegung eines Bereichs, in welchem man den Parameter erwartet, ermöglicht eine zweite Sicherheitsstufe. Wenn z.B. die gemessene Masse kleiner als die eingestellte, erwartete Masse ist, kann die Messung dennoch fortgeführt werden, obwohl der Istwert nicht dem Sollwert entspricht.

Bei einer anderen Ausgestaltung wird ferner überprüft, ob der Istwert innerhalb des ausgewählten Parameterbereichs liegt, und wobei eine weitere Fehlermeldung ausgegeben wird, wenn der Istwert nicht innerhalb des ausgewählten Parameterbereichs liegt.

Insbesondere weist das Bestimmen des Parameters der Schritte a) und/oder b) auf: Messen eines Antriebstroms oder einer Antriebskraft während zumindest einer der Beschleunigungsphasen des Bewegungszyklus, wobei der Bewegungszyklus eine Phase mit einer positiven Beschleunigung und eine Phase mit einer negativen Beschleunigung umfasst; und Bestimmen des Parameters basierend auf dem gemessenen Antriebsstrom oder auf der gemessenen Antriebskraft.

Sensoren zur Bestimmung des Antriebsstroms und/oder der Antriebskraft können in einer standardmäßigen Ausführung konventioneller Koordinatenmessgeräte bereits vorhanden sein, so dass der sicherheitsrelevante Parameter auf Basis eines Messwerts bestimmbar ist, der ohne zusätzliche Sensoren bestimmbar ist. Das Verfahren der Erfindung kann also ohne gravierende Änderungen mit konventionellen Koordinatenmessgeräten durchgeführt werden. Die Kosten und Maßnahmen zur sichereren Ausgestaltung des Koordinatenmessgeräts sind überschaubar.

Auch ist es von Vorteil, wenn der Antriebsstrom oder die Antriebskraft für jede der Beschleunigungsphasen des Bewegungszyklus gemessen wird, insbesondere wenn die Beschleunigungsphasen zeitlich so kurz sind, dass die jeweilige Parameterbestimmung z.B. wegen Überschwingern ungenau wäre, wobei die Parameterbestimmung für jede der Beschleunigungsphasen erfolgt, wobei der jeweils bestimmte Parameter anschließend gemittelt wird und wobei der entsprechende Mittelwert den gesamten jeweiligen Bewegungszyklus repräsentiert.

Durch Mittelwertbildung erhöht sich die Genauigkeit der Parameterbestimmung. Es wird eine redundante Information berücksichtigt, die sowieso vorliegt. Überschwinger fallen weniger stark ins Gewicht bzw. können ausgeglichen werden.

Insbesondere wird der Antriebsstrom oder die Antriebskraft für jede der Beschleunigungsphasen des Bewegungszyklus gemessen, insbesondere wenn die Beschleunigungsphasen zeitlich ausreichend lang sind, so dass Überschwinger bei der Parameterbestimmung unbeachtlich sind, wobei die Parameterbestimmung für jede der Beschleunigungsphasen erfolgt und wobei die jeweils für die Beschleunigungsphasen bestimmten Parameter miteinander verglichen werden.

Diese Vorgehensweise ermöglicht eine Plausibilitätsprüfung innerhalb eines Mess- bzw. Bewegungszyklus. Es kann überprüft werden, ob die relevanten Sensoren (z.B. die Strommesseinrichtungen) richtig funktionieren.

Bei einer weiteren Ausgestaltung wird der Schritt a) durchgeführt, indem eine Bedienperson den Sollwert in das Koordinatenmessgerät eingibt.

Vorzugsweise veranlasst die Fehlermeldung: eine Notausschaltung des Koordinatenmessgeräts; einen sofortigen Abbruch einer aktuellen Bewegung des Objekts; eine Herabsetzung einer Bewegungsgeschwindigkeit; und/oder eine Ausgabe einer Bedienperson-Warnung.

Bei einer anderen Ausgestaltung umfasst das Objekt ein jeweils zu vermessendes Werkstück und/oder eine Werkstückaufnahme, insbesondere eine Planscheibe, wobei das Objekt translatorisch oder rotatorisch bewegt wird.

Insbesondere wird jeder der erneut bestimmten Parameter in einer Parameter-Historie hinterlegt und mit den bereits hinterlegten Parametern verglichen, um im Falle einer Abweichung die Fehlermeldung auszugeben.

Auf diese Weise lässt sich eine Langzeit-Plausibilitätsprüfung durchführen.

Ferner wird die oben genannte Aufgabe gelöst durch ein Koordinatenmessgerät gemäß Anspruch 11.

Die Steuereinrichtung kann ferner eingerichtet sein, das Verfahren gemäß einer der Unteransprüche 2 bis 10 durchzuführen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: einen schematischen Aufbau eines Koordinatenmessgeräts (Fig. 1A) inkl. einem Drehtisch (Fig. 1B);
- Fig. 2: ein Kenngrößen-Zeit-Diagramm ohne Überschwinger (Fig. 2A) und das entsprechende Kenngrößen-Zeit-Diagramm mit Überschwingern (Fig. 2B); und
- Fig. 3: ein Flussdiagramm eines Verfahrens zum Überwachen eines Parameters.

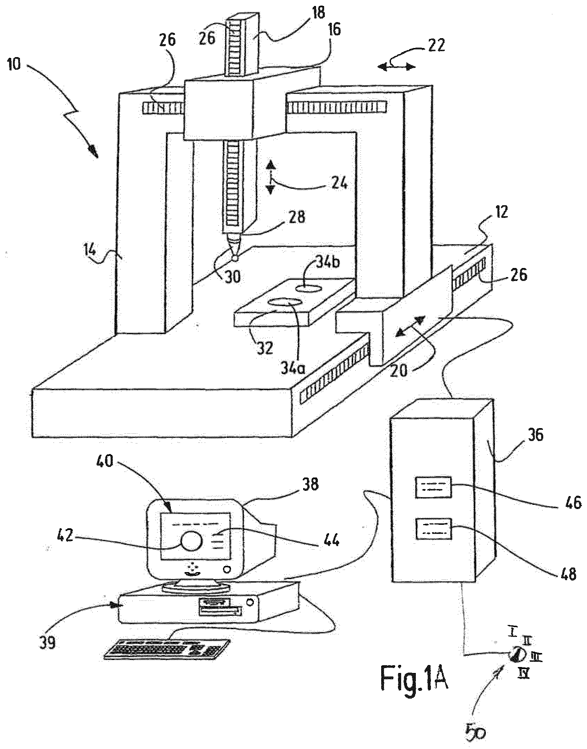

Fig. 1A zeigt ein Koordinatenmessgerät 10 (nachfolgend auch kurz als "KMG 10" bezeichnet), das exemplarisch in einer Portalbauweise gezeigt ist. Das KMG 10 besitzt hier eine Basis 12, die oft auch als Messtisch bezeichnet wird und auf der ein Portal 14 angeordnet ist. Eine Traverse des Portals 14 trägt einen Schlitten 16, an dem eine Pinole 18 angeordnet ist. Das KMG 10 weist vorzugsweise elektrische Antriebe (hier nicht dargestellt) auf, mit denen das Portal 14 in Richtung eines Pfeils 20 relativ zur Basis 12 bewegbar ist. Des Weiteren kann der Schlitten 16 entlang eines Pfeils 22 an dem Portal 14 bewegt werden. Die Pinole 18 kann in Richtung eines Pfeils 24 relativ zu dem Schlitten 16 bewegt werden. An der Basis 12, dem Portal 14 und der Pinole 18 sind jeweils Maßstäbe 26 angeordnet, mit deren Hilfe eine aktuelle Position des Portals 14, des Schlittens 16 und/oder Pinole 18 bestimmt werden kann. Die Pfeile 20-24 spannen eine maschinenspezifisches kartesisches Koordinatensystem auf. Die Maximalauslenkungen der beweglichen Elemente können ein Messvolumen definieren.

An einem unteren freien Ende der Pinole 18 ist ein Tastkopf bzw. Sensor 28 angeordnet, der z.B. einen Taststift 30 trägt. Der Tastkopf 28 kann mit Hilfe der Antriebe des KMG 10 innerhalb des Messvolumens, das durch die Bewegungsachsen des Portals 14, des Schlittens 16 und der Pinole 18 aufgespannt wird, bewegt werden. Der Taststift 30 dient zum Antasten eines Werkstücks 32, das auf der Basis 12 des KMG 10 angeordnet ist. Die Basis 12 dient hier folglich als nicht näher bezeichnete Werkstückaufnahme.

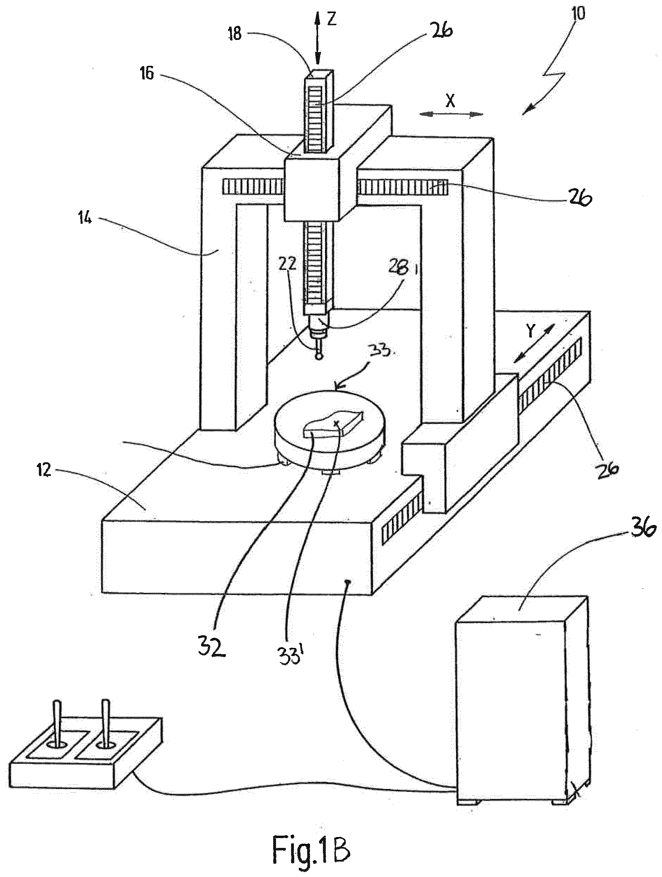

Das KMG 10 ist hier in Form eines typischen Beispiels dargestellt. Die Erfindung ist jedoch nicht auf Koordinatenmessgeräte 10 in Portalbauweise beschränkt und kann gleichermaßen bei Koordinatenmessgeräten 10 anderer Bauweise zum Vermessen von Werkstücken 32 verwendet werden, etwa bei Koordinatenmessgeräten 10 in Horizontalarm-Bauweise. Ferner kann das KMG 10 zusätzlich einen sogenannten Drehtisch 33 (Fig. 1B) aufweisen, der auf der Basis 12 positionierbar ist, um das Werkstück 32 zwischen verschiedenen Messpunkten um eine 33' zu drehen. In der Einbauversion ist der Drehtisch 33 in die Basis (Messtisch) 12 integriert (nicht gezeigt). In der Aufbauversion ist der Drehtisch 33 portabel und kann auf der Basis 12 befestigt werden. Mit dem Drehtisch 33 kann das Werkstück 32 in einer beliebigen Winkelstellung positioniert werden. Dadurch werden hochgenaue Winkel- und Radialmessungen möglich. Ein besonderer Anwendungsbereich von Drehtischen 33 ist das Vermessen von Rotationskörpern wie z.B. Zahnrädern, Drehteilen, Nockenwellen und Ähnlichem. Drehtische 33 erleichtern ebenso das Vermessen von prismatischen Teilen. Die Drehtische 33 haben die Funktionen, das Werkstück 32 zu halten, zu bewegen und zu positionieren.

Insbesondere bei der Verwendung von Drehtischen 33 kann trotz zusätzlicher Sicherheitseinrichtungen (z.B. Lichtgittern, Trittmatten mit Totmannschaltung, etc.) nicht immer sicher ausgeschlossen werden, dass eine Unachtsamkeit oder unsachgemäße Handhabung zu einer Gefährdung einer Bedienperson (nicht dargestellt) oder des KMG 10 führt. So besteht z.B. eine Verletzungsgefahr infolge der Drehbewegung des Drehtischs 33. Durch Mitziehen von Kleidung können Körperteile gequetscht oder geschert werden. Eine weitere Verletzungsgefahr besteht infolge einer erhöhten Umfangsgeschwindigkeit einer Planscheibe des Drehtischs 33. Wenn z.B. größere, d.h. schwerere, Planscheiben verwendet werden als solche, auf die der Drehtisch ursprünglich eingestellt wurde, erhöht sich das Massenträgheitsmoment des bewegten Objekts (Werkstück 32 plus Planscheibe), so dass die Drehgeschwindigkeit angepasst, nämlich reduziert, werden muss. Eine Erhöhung des Massenträgheitsmoments hat schließlich eine Erhöhung der kinetischen Energie (E=1/2 J w²) zur Folge.

Das in der Fig. 1A gezeigte Werkstück 32 besitzt z.B. zwei Bohrungen 34a und 34b, deren Lage, Form und Durchmesser mit Hilfe des KMG 10 vermessen werden sollen. Die Bohrungen 34a und 34b stellen typische Geometriemerkmale des Werkstücks 32 dar, die mit Hilfe des Koordinatenmessgeräts 10 vermessen werden können. Andere Geometriemerkmalen können zylindrische oder nicht-zylindrische Vorsprünge, Zapfen, Ausnehmungen, Hinterschneidungen, Kantenlängen oder gar eine komplexe Raumform sein, wie etwa die Raumform einer Turbinenschaufel.

Das KMG 10 weist ferner eine Steuerung 36 auf, die die Antriebe des KMG 10 steuert und aktuelle Positionen des Portals 14, des Schlittens 16, der Pinole 18 und/oder des Drehtisches (Winkelposition) bestimmt. In vielen Fällen ist die Steuerung 36 eine speicherprogrammierbare Steuerung.

Ferner kann ein Computer 38 vorgesehen sein, auf dem eine Mess- bzw. Auswertesoftware 39 ausgeführt wird. Die Software 39 wertet die von der Steuerung 36 gelieferten Messsignale bzw. -werte aus. Die Steuerung 36 erzeugt insbesondere ein Messprotokoll 40, das hier beispielhaft eine Messkurve 42 und eine nummerische Ausgabe der Messwerte 44 beinhaltet. Gemeinsam bilden die Steuerung 36 und der Computer 38 mit der Mess- bzw. Auswertesoftware 39 eine Auswerte- und Steuereinheit.

Die Steuerung 36 besitzt im Ausführungsbeispiel der Fig. 1A mehrere Speicher 46 und 48. Dort können Messwerte und Parameter, wie z.B. Antriebsströme, Antriebskräfte, das Massenträgheitsmoment einer Planscheibe und/oder des Werkstücks 32) gespeichert werden. Ferner können dort Pläne, insbesondere werkstückspezifische Prüfpläne, hinterlegt sein. Ein Plan zeichnet sich durch eine Abfolge von Anfahrpositionen aus, in welche das Werkstück 32 und/oder der Sensor 28 bewegt werden, z.B. zum Zwecke einer Referenzfahrt. Ein Prüfplan repräsentiert eine Abfolge von mehreren Messpositionen, die von dem KMG 10 abgefahren werden, indem z.B. das Portal 14 und/oder die Werkzeugaufnahme (z.B. der Drehtisch) entsprechend bewegt werden, und wobei der Tastsensor 28 zwecks Durchführung einer Messung in Kontakt mit dem Werkstück 32 gebracht wird.

Die oben erwähnte Verletzungsgefahr für die Bedienperson ist proportional zur kinetischen Energie des bewegten Objekts. Bei translatorischen Bewegungen ist die kinetische Energie proportional zum Produkt, das aus der Masse m des bewegten Objekts und dem Geschwindigkeitsquadrat v² gebildet wird. Bei einer rotatorischen Bewegung ist die kinetische Energie proportional zum Produkt, das aus dem Trägheitsmoment J und dem Quadrat der Winkelgeschwindigkeit w² gebildet wird. In der nachfolgenden Beschreibung wird die Erfindung am Beispiel einer rotatorischen Bewegung beschrieben werden. Dies bedeutet, dass das KMG 10 mit einem Drehtisch betrieben wird, auf welchen das zu vermessende Werkstück 32 gespannt ist und der eine Planscheibe aufweist, die gemeinsam das Objekt bilden, dessen Trägheitsmoment J zur Bestimmung der Rotationsenergie zu bestimmen ist. Üblicherweise ist die Planscheibe ein separates Bauteil. Zusätzlich kann auch ein Rotor berücksichtigt werden. Generell sind für das Massenträgheitsmoment alle rotierenden Bauteile relevant. Es versteht sich, dass die nachfolgenden Ausführungen analog für translatorische Bewegungen (z.B. auch für Kreuztische) gelten, bei denen das Werkstück 32 z.B. auf eine beweglich gelagerte Werkstückaufnahme aufgespannt ist. Ferner versteht es sich, dass anstatt des Massenträgheitsmoments J auch andere sicherheitsrelevante Parameter betrachtet werden können, wie z.B. die Geschwindigkeit v bzw. w oder ein Bewegungsbereich des KMG 10. Die Geschwindigkeit v lässt sich z.B. über den bzw. die Maßstäbe 26 bzw. deren Änderung bestimmen.

Gemäß der Erfindung wird das Massenträgheitsmoment J nicht nur ein einziges Mal zum Beginn einer Messung bestimmt. Das Massenträgheitsmoment J wird wiederkehrend, vorzugsweise "kontinuierlich" bzw. periodisch, bestimmt. Das Massenträgheitsmoment wird insbesondere während einer Bewegung des Objekts von einer Anfahrposition zu einer nächsten Anfahrposition bestimmt, die durch den Plan vorgegeben ist. Das Massenträgheitsmoment J kann basierend auf einem Stromverlauf eines Antriebs, insbesondere während eines Bewegungszyklus, bestimmt werden. Dies bedeutet mit anderen Worten, dass das Massenträgheitsmoment J aus dem Antriebsstrom herleitbar ist. Der Antriebsstrom bzw. dessen Verlauf ist messbar.

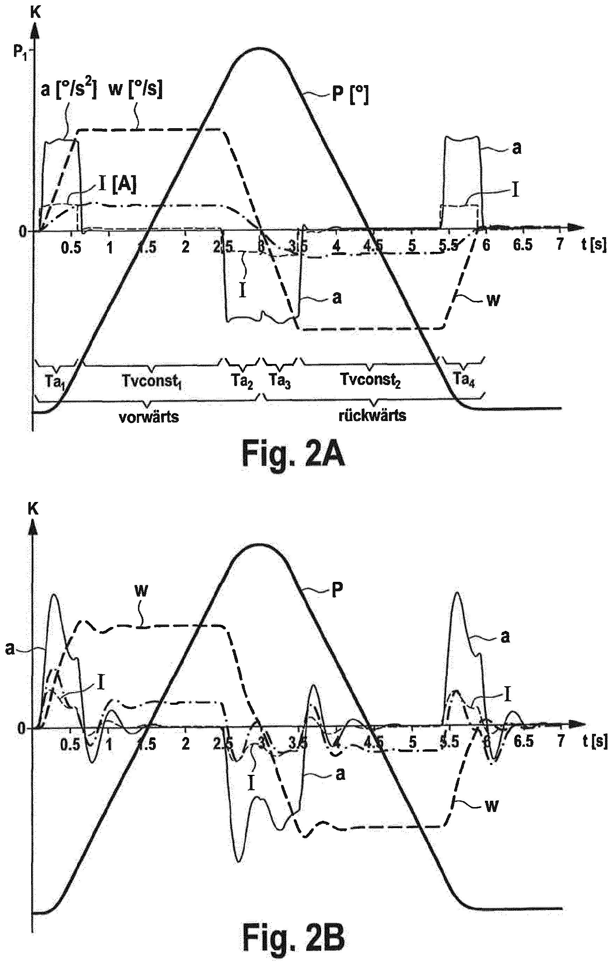

Bezug nehmend auf die Fig. 2A und 2B sind Kenngrößen-Zeit-Diagramme gezeigt, die eine Rotationsbewegung verdeutlichen, die sich wiederum aus zwei entgegengesetzt gerichteten Bewegungen zusammensetzt. Die Fig. 2A zeigt einen Kenngrößen-Verlauf ohne Überschwinger. Die Fig. 2B zeigt einen Kenngrößen-Verlauf inklusive Überschwingern. Auf der horizontalen Achse ist die Zeit t aufgetragen. Auf der vertikalen Achse sind die Kenngrößen K aufgetragen.

In der Fig. 2A verdeutlicht eine exemplarisch dreiecksförmige Kurve P eine Winkellage bzw. -position einer Rotationsachse bzw. des rotierenden Objekts, die in der Einheit "Grad" gemessen wird. Ein Verlauf einer Beschleunigung a wird in der Einheit "Grad/s²" gemessen. Während einer "Vorwärtsbewegung" der Rotationsachse nimmt die Winkelposition stetig bis zu einem Maximum (P1) zu. Anschließend wird die Bewegungsrichtung umgedreht (siehe "rückwärts"), so dass die Winkelposition abnimmt. Die Beschleunigung a lässt sich in mehrere Beschleunigungsphase T unterteilen. Während der Vorwärtsbewegung steigt die Beschleunigung a sehr steil (d.h. schnell) von Null auf einen Maximalwert an, den die Beschleunigung a während einer ersten Beschleunigungsphase Ta1 beibehält. An die erste Beschleunigungsphase Ta1 schließt sich eine Phase Tvconst1 an, während der die Beschleunigung null ist und während der die Winkelgeschwindigkeit w konstant ist. Kurz bevor die Drehachse ihre (gewünschte) Messposition P1 erreicht, wird die Bewegung abgebremst. Dies geschieht während einer zweiten Beschleunigungsphase Ta2, wobei die zweite Beschleunigung entgegengesetzt zur ersten Beschleunigung der ersten Beschleunigungsphase Ta1 gerichtet ist. Die Winkelgeschwindigkeit w ist in der Messposition P1 auf Null reduziert. Ein Motorstrom I, der in der Einheit "Ampere" gemessen wird, nimmt während der ersten Beschleunigungsphase Ta1 relativ rasch einen ersten nahezu konstanten Wert ein, während er während der Phase Tvconst1 nahezu Null ist, weil sich das Objekt bereits in Rotation befindet und diese Rotation lediglich aufrechterhalten werden muss. Während der zweiten Beschleunigungs- bzw. Bremsphase Ta2 muss der Motor die Rotation aktiv bremsen und nimmt deshalb einen nahezu konstanten negativen Wert an. Diesen Motorstrom I kann man messen, insbesondere während den Beschleunigungsphasen Ta1 und Ta2. Auf Basis dieser Ströme kann das Massenträgheitsmoment J des rotierenden Objekts berechnet werden.

Eine rechte Hälfte der in der Fig. 2A gezeigten Kurven drücken eine "Rückwärtsbewegung" aus, bei der die Drehachse aus der ersten Messposition P1 in ihre Ursprungsposition zurückgedreht wird. Dementsprechend verlaufen die verschiedenen Kurven P, a, w und I im Wesentlichen analog, jedoch mit umgekehrtem Vorzeichen im Vergleich zur Vorwärtsbewegung.

Die in der Fig. 2A gezeigten Kurvenverläufe sind repräsentativ für eine sogenannte "Messfahrt" des KMG 10 (inklusive Drehtisch). Bei einer Messfahrt wird das Objekt zuerst z.B. um 30° im positiven Drehsinn gedreht und anschließend um 30° im negativen Drehsinn zurückgedreht. Aus den während der Beschleunigungsphasen Ta1, Ta2, Ta3 und Ta4 erhaltenen Stromstärke des Antriebs kann jeweils ein Massenträgheitsmoment J berechnet werden, insbesondere mittels eines Mittelwerts des Stroms während der Beschleunigungsphasen. Aus diesen vier Werten für das Massenträgheitsmoment kann wiederum unter Mittelwertsbildung ein "initiales" Massenträgheitsmoment (somit höherer Genauigkeit) für das Objekt bestimmt werden. Mit einer Messfahrt lässt sich das Massenträgheitsmoment initial bestimmen, sofern es nicht bekannt oder vorgegeben ist. Das Massenträgheitsmoment J kann zur Bestimmung der Rotationsenergie (E=1/2 J w²) benutzt werden, wobei die Winkelgeschwindigkeit über einen Drehgeber bestimmt werden kann.

Die Fig. 2B zeigt den gleichen Bewegungsablauf wie die Kurven der Fig. 2A (siehe insbesondere die Kurve P). Die Beschleunigung a, der Antriebsstrom I sowie die Winkelgeschwindigkeit w weisen jedoch "Überschwinger" gegenüber den entsprechenden Verläufen der Fig. 2A auf. Insbesondere die Überschwinger des Antriebsstroms I erschweren die Bestimmung des Massenträgheitsmoments J, weil der Antriebsstrom I während den Beschleunigungsphasen Ta, zumindest anfänglich, nicht konstant ist. Bestimmt man das Massenträgheitsmoment J auf Basis dieser Antriebsströme I, so ist das berechnete Massenträgheitsmoment J fehlerbehaftet bzw. relativ ungenau. Dieses Problem tritt insbesondere dann auf, wenn die Bewegungen zeitlich relativ kurz sind, d.h. sich das System nicht einschwingen kann. In diesem Fall legt das Objekt nur relativ kurze Wege zwischen zwei benachbarten Messpunkten P zurück. Dieser Nachteil lässt sich durch die oben beschriebene Mittelwertbildung jedoch reduzieren. Außerdem werden bei kurzen Bewegungen auch keine hohen Geschwindigkeiten w erreicht, so dass die Energie, in deren Berechnung die Geschwindigkeit quadratisch eingeht, sowieso geringer ist.

Sobald das Massenträgheitsmoment J (initial) bekannt ist, kann ein optional vorgesehener Schalter 50 (vergleiche Fig. 1) entsprechend voreingestellt werden. Generell gilt, dass das Einstellen des Schalters unabhängig von einer initialen Bestimmung des Massenträgheitsmoments erfolgen kann. Der Schalter 50 der Fig. 1 kann z.B. vier Stellungen I, II, III und IV einnehmen. Jede Stellung repräsentiert einen Massenträgheitsmoment-Bereich, wobei die Bereiche beliebig einteilbar sind und vorzugsweise bei Null starten. Die Bereiche I-IV decken insbesondere alle Massenträgheitsmomente ab, die erwartet werden bzw. zulässig sind, was insbesondere von der Masse und der Massenverteilung des Objekts bzw. des Werkstücks 32 abhängt. Der Schalter 50 kann durch Hardware (z.B. mechanisch) und/oder durch Software implementiert sein. Der Schalter 50 dient im Wesentlichen der Sicherheit, wie es nachfolgend noch näher erläutert werden wird. Der Schalter 50 stellt eine Redundanz bereit, die "sicher" abfragbar ist. Die Bereichsgrenzen können sich an den vorwiegend von der Bedienperson vermessenen Objekten orientieren. Werden beispielsweise auf dem KMG 10 zum überwiegenden Teil Werkstücke 32 mit einem Massenträgheitsmoment J < 2 kgm² vermessen, können diese mit einer Geschwindigkeit von z.B. 90°/s bewegt werden. Alle übrigen Werkstücke 32 oberhalb dieser Grenze (z.B. Massenträgheitsmoment > 8 kgm²) können dann beispielsweise mit 30°/s bewegt werden (Werkstücke mit einem Massenträgheitsmoment > 20 kgm² wären dann auch bei 30°/s gefährlich). Welche maximale Geschwindigkeit welcher Schalterstellung zugeordnet ist, kann z.B. in einer entsprechenden Konfigurationsdatei in der Steuerung 36 hinterlegt sein. Zur Sicherung gegen Manipulation ist es von Vorteil, diese Datei durch Checksummen zu sichern.

Eine weitere Redundanz ist durch eine Rückfrage der Steuerung 26 realisierbar. Die Bedienperson gibt z.B. über eine graphische Benutzeroberfläche einen Wert für das Massenträgheitsmoment in die Steuerung 36 ein. Die Steuerung 36 zeigt der Bedienperson an, welchen Wert die Steuerung 36 registriert hat, und fragt dann nach, ob der verstandene Wert korrekt ist. Die Bedienperson bestätigt den nachgefragten Wert oder korrigiert den Wert, wodurch eine erneute Nachfrage getriggert wird.

Ferner ist es möglich, den Schalter 50 so auszugestalten, dass das (initiale) Massenträgheitsmoment J nicht nur bereichsweise, sondern genau, d.h. kontinuierlich, eingestellt werden kann. Der Schalter 50 kann zusätzlich durch einen Software-Schlüssel oder mechanischen Schlüssel geschützt werden, um eine Manipulation durch eine nicht autorisierte Bedienperson zu verhindern.

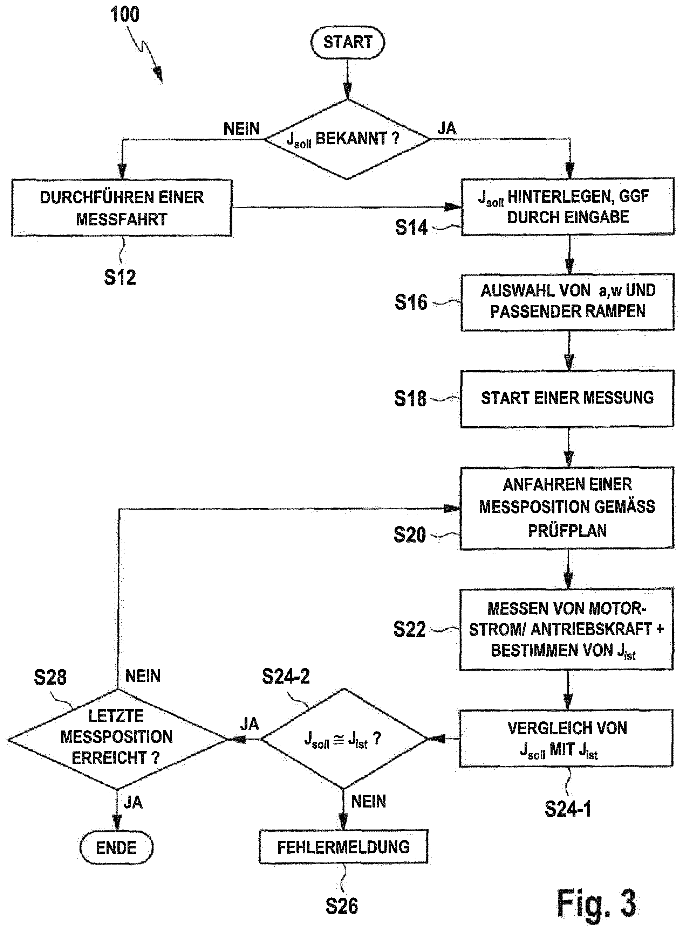

Unter Bezugnahme auf Fig. 3 wird nachfolgend ein Verfahren 100 zum sicheren Überwachen eines Parameters beschrieben, der in die Bestimmung der (kinetischen oder rotatorischen) Energie des Objekts einfließt. Dieser Parameter wird insbesondere durch die Masse m bzw. das Massenträgheitsmoment J repräsentiert. Ändert sich die Masse m bzw. das Massenträgheitsmoment J erheblich gegenüber einer Masse m bzw. einem Massenträgheitsmoment J, auf die bzw. das das KMG 10 initial eingestellt ist, kann die Sicherheit der Bedienperson gefährdet sein. Die nachfolgende Beschreibung beschränkt sich auf die Beschreibung des Parameters Masse bzw. Massenträgheitsmoment, gilt aber analog auch für andere Parameter wie z.B. Geschwindigkeit bzw. Winkelgeschwindigkeit.

Deshalb muss zuerst eine Initialeinstellung des KMG 10 erfolgen. Dazu wird in einem Schritt S10 abgefragt, ob das Massenträgheitsmoment J des zu vermessenden Werkstücks 32 (sowie das Massenträgheitsmoment J des Drehtischs bzw. der Planscheibe) vorab bekannt ist. Wenn das Massenträgheitsmoment J nicht bekannt ist, wird in einem Schritt S12 das Massenträgheitsmoment bestimmt, z.B. durch die oben beschriebene Messfahrt. Wenn initial weder ein Wert manuell eingegeben wird noch eine Messfahrt durchgeführt wird, kann ein Messvorgang unter entsprechender Fehlerausgabe abgebrochen werden, um den Anwender zur Initialbestimmung (Eingabe oder Messfahrt) zu zwingen.

Die Messfahrt kann aus einer einfachen Bewegung oder aus einer oder mehreren Hin- und Herbewegungen bestehen. In der Fig. 2A ist eine Hin- und Herbewegung gezeigt, auf deren Basis vier (Antriebs-) Stromwerte I messbar sind, die wiederum zur Berechnung des Massenträgheitsmoments J herangezogen werden, ggf. unter Berücksichtigung von Mittelwertbildungen, wie oben beschrieben. Das Massenträgheitsmoment J des zu vermessenden Werkstücks 32 (sowie das Massenträgheitsmoment J des Drehtischs bzw. der Planscheibe) kann vorab bekannt sein, indem es von der Bedienperson aktiv eingegeben wird oder in einem Plan, den die Steuerung der Bedienperson zur Auswahl anbieten kann, bereits fest hinterlegt ist.

Sobald das (initiale) Massenträgheitsmoment J entweder im Schritt S12 gemessen ist oder z.B. von der Bedienperson in der Steuerung 36 hinterlegt ist, ist ein Sollwert Jsoll für das Massenträgheitsmoment bestimmt und festgelegt (Schritt S14).

In einem optionalen Schritt S16 kann die Steuerung 36 in Kenntnis des initialen Massenträgheitsmoments Jsoll für jeden Bewegungszyklus zwischen zwei Anfahr- bzw. Messpositionen eine Beschleunigung a sowie eine Winkelgeschwindigkeit w auswählen. Dabei kann die Software 39 den Verlauf (Rampen) und die zu erreichenden Maximalwerte der Beschleunigung a und der Winkelgeschwindigkeit w festlegen. Danach kann die eigentliche Vermessung des Werkstücks 32 in einem Schritt S18 beginnen. Die Messung beginnt damit, dass das KMG eine erste Messposition gemäß einem entsprechenden Plan bzw. Prüfplan anfährt (Schritt S20). Zu diesem Zweck kann der Drehtisch, auf den das zu vermessende Werkstück 32 gespannt ist, in eine entsprechende Winkelstellung gedreht bzw. gefahren werden. Es versteht sich, dass die Beschreibung der Fig. 3 nicht nur für Vermessungen gemäß Prüfplänen gilt, sondern allgemein für Pläne gilt, bei denen ein Objekt zwischen verschiedenen Positionen bewegt wird, wie z.B. während einer Referenzfahrt. Dies gilt auch für die nachfolgende Beschreibung.

Während der entsprechenden Bewegung wird in einem Schritt S22 der Motor- bzw. Antriebsstrom I und/oder eine Antriebskraft gemessen, insbesondere während der Beschleunigungsphasen Ta1 und Ta2. Auf Basis dieser Messungen wird dann das tatsächliche Massenträgheitsmoment Jist bestimmt. Überschwinger, wie sie in der Fig. 2B gezeigt sind, können ausgeblendet werden, indem optional hier näher gezeigte und erläuterte Verzögerungszeiten bei der Bestimmung des - vorzugsweise konstanten - Antriebsstroms I berücksichtigt werden. Alternativ zum Antriebsstrom I könnte man auch eine Beschleunigung betrachten, d.h. eine Ist-Beschleunigung anstatt einem Ist-Antriebsstrom. Ferner wären Beschleunigungsrampen denkbar.

In einem Schritt S24 wird anschließend der Sollwert Jsoll des Massenträgheitsmoments mit dem Istwert bzw. dem tatsächlichen Wert des Massenträgheitsmoments Jist verglichen. Dies kann z.B. dadurch geschehen, dass abgefragt wird, ob Jsoll im Wesentlichen Jist entspricht (Schritt S24-2). Dabei können Toleranzen (z.B. ± 5%) berücksichtigt werden. Wenn der Istwert Jist wesentlich vom Sollwert Jsoll abweicht, also z.B. außerhalb des Toleranzbereichs liegt, wird in einem Schritt S26 eine Fehlermeldung ausgegeben, wie es nachfolgend noch näher erläutert werden wird. Ergibt die Überprüfung aber, dass der Sollwert Jsoll dem Istwert Jist im Wesentlichen entspricht, kann mit der Messung fortgefahren werden. Zu diesem Zweck wird in einem Schritt S28 abgefragt, ob eine letzte Messposition des Prüfplans erreicht ist. Sobald die letzte Messposition erreicht ist, ist das Verfahren 100 beendet, wobei in einen sogenannten Default-Modus umgeschaltet werden kann, so dass sich der Drehtisch unabhängig von seiner Beladung z.B. nicht schneller als mit 30°/s bewegt, wobei die Obergrenze aber weiterhin überwacht wird. Eine entsprechende Default-Geschwindigkeit hängt von dieser Obergrenze ab. Solange die letzte Messposition nicht erreicht ist, kehrt man zum Schritt 20 zurück, wo eine nächste Messposition angefahren wird, die der aktuellen Messposition des Prüfplans folgt. Wie bereits erwähnt, ist der Prüfplan nur exemplarisch zu verstehen. Eine Überwachung funktioniert auch bei Bewegungen des Koordinatenmessgeräts mit einem Joystick oder bei sonstigen Bewegungsfahrten (z.B. zum Warmlauf des Koordinatenmessgeräts).

Die im Schritt S26 ausgegebene Fehlermeldung kann dazu führen, dass die Vermessung abgebrochen wird. Die Fehlermeldung kann dazu führen, dass ein aktueller Fahrbefehl sofort unterbrochen wird. Die Fehlermeldung kann dazu führen, dass die Geschwindigkeit stark reduziert wird, weil die Geschwindigkeit quadratisch in die Energie eingeht. Die Fehlermeldung kann dazu benutzt werden, um die Bedienperson zu warnen bzw. dazu aufzufordern, die Messanordnung zu überprüfen, insbesondere wenn ein zu kleines Massenträgheitsmoment bestimmt wird.

Der in der Fig. 1 gezeigte und oben beschriebene Schalter 50 kann für weitere Sicherheitsabfragen relevant sein, die in der Fig. 3 nicht gezeigt sind und die dem Schritt S24-2 folgen. Wenn in der Abfrage S24-2 festgestellt wird, dass Jist zu Jsoll passt, kann zusätzlich abgefragt werden, ob Jist innerhalb des durch die Schalterstellung definierten Massenträgheitsmoment-Bereichs liegt. Wenn Jist z.B. groß ist und die Schalterstellung ein kleines Massenträgheitsmoment J repräsentiert, kommt es ebenfalls zu der oben beschriebenen Abschaltung. Wenn Jist aber kleiner als das durch die Schalterstellung repräsentierte Massenträgheitsmoment J ist, besteht keine Gefahr für die Bedienperson, weil die tatsächliche Energie kleiner als eine erwartete Energie ist. Dennoch sollte der Aufbau überprüft werden.

Ferner kann das oben beschriebene Schema zur Plausibilitätsüberprüfung eingesetzt werden.

In einem ersten Fall kann durch einen Vergleich z.B. der beiden Antriebsströme, die man während den beiden Beschleunigungsphasen (z.B. Ta1 und Ta2) einer einfachen Bewegung (z.B. Vorwärtsbewegung) erhält, überprüft werden, ob die Strommesseinrichtung richtig funktioniert. In einem weiteren Fall kann überprüft werden, ob die Antriebsströme bei einer Hin- und Herbewegung (Vorwärts- und Rückwärtsbewegung) gleich sind. In beiden Fällen erfolgt also ein Vergleich von Werten, die innerhalb eines einzigen Bewegungszyklus generiert werden. Zusätzlich können Werte miteinander verglichen werden, die während mehreren Bewegungszyklen generiert werden. Auch lassen sich Werte miteinander vergleichen, die aus länger zurückliegenden Bewegungszyklen stammen. Ferner können unterschiedliche Informationsquellen miteinander verglichen werden, wie z.B. eine Vorgabe durch einen Prüfplan mit einer Vorgabe durch den Anwender über den Schalter und die Messung über den Strom. Durch diese Maßnahmen lässt sich die Messgenauigkeit weiter verbessern. Zu diesem Zweck werden die Messwerte in einem hier nicht näher gezeigten und beschriebenen Historienspeicher abgelegt.

### Bezugszeichenliste

- 10: Koordinatenmessgerät (KMG)
- 12: Basis (Messtisch)
- 14: Portal
- 16: Schlitten
- 18: Pinole
- 20: Pfeil
- 22: Pfeil
- 24: Pfeil
- 26: Maßstäbe
- 28: Tastkopf
- 30: Taststift
- 32: Werkstück
- 34a,b: Bohrungen
- 36: Steuerung
- 38: Computer
- 39: Mess- bzw. Auswertesoftware
- 40: Messprotokoll
- 42: Messkurve
- 44: Messwerte
- 46: Speicher
- 48: Speicher
- 50: Schalter
- 100: Verfahren
- a: Beschleunigung
- t: Zeit
- v*2: Geschwindigkeitsquadrat
- v: Geschwindigkeit
- w: Winkelgeschwindigkeit
- I: Antriebsstrom
- J: Massenträgheitsmoment
- Jsoll: Sollwert
- Jist: Istwert
- K: Kenngrößen
- m: Masse
- P1: Messposition
- T: Beschleunigungsphase
- Ta1: erste Beschleunigungsphase
- Ta2: zweite Beschleunigungsphase
- Tvconst1: Phase konstanter Geschwindigkeit

## Patentansprüche

1. Verfahren (100) zum sicheren Überwachen eines Parameters eines Koordinatenmessgeräts (10), nämlich eines Massenträgheitsmoments (J) oder einer Masse (m), der bzw. die zur Bestimmung einer Bewegungsenergie eines Objekts erforderlich ist, das mittels eines Sensors (28) des Koordinatenmessgeräts (10) vermessbar ist, wobei das Objekt zwischen verschiedenen Positionen bewegt wird, wobei das Objekt an jeder der Positionen (P) vorzugsweise zumindest kurzzeitig in Ruhe ist, wobei das Verfahren (100) die Schritte aufweist:
a) initiales Bestimmen (S12) des Parameters und Festlegen (S14) des initial bestimmten Parameters als Sollwert (Jsoll);
b) Bewegen (S20) des Objekts von einer Position (P) zu einer nächsten Position (P) und erneutes Bestimmen des Parameters (J) für einen Bewegungszyklus zwischen den entsprechenden Positionen (P);
c) Festlegen (S22) des erneut bestimmten Parameters als Istwert (Jist);
d) Vergleichen (S24-2) des Sollwerts (Jsoll) mit dem Istwert (Jist);
e) Fortfahren mit der Bewegung des Objekts, wenn der Vergleich (S24-2) ergibt, dass der Istwert (Jist) im Wesentlichen mit dem Sollwert (Jsoll) übereinstimmt, und Zurückkehren zum Schritt b), so lange eine letzte Position (P) nicht erreicht ist; oder
f) Ausgeben (S26) einer Fehlermeldung, wenn der Vergleich (S24-2) ergibt, dass der Istwert (Jist) wesentlich vom Sollwert (Jsoll) abweicht.

2. Verfahren nach Anspruch 1, das ferner die Schritte aufweist:
Auswählen eines Parameterbereichs (I, II, III, IV), der einen erwarteten Parameterwert umfasst, durch eine Bedienperson des Koordinatenmessgeräts (10) aus einer Vielzahl von Parameterbereichen, bevor der Schritt b) durchgeführt wird, wobei eine Gesamtheit aller Parameterbereiche jeden Parameterwert umfasst, der theoretisch möglich und praktisch zulässig ist, und wobei der Schritt des Auswählens vorzugsweise durch Betätigen eines Wahlschalters (50) des Koordinatenmessgeräts (10) erfolgt.

3. Verfahren nach Anspruch 2, wobei ferner überprüft wird, ob der Istwert (Jist) innerhalb des ausgewählten Parameterbereichs (I, II, III, IV) liegt, und wobei eine weitere Fehlermeldung ausgegeben wird (S26), wenn der Istwert (Jist) nicht innerhalb des ausgewählten Parameterbereichs (I, II, III, IV) liegt.

4. Verfahren nach einem der Ansprüche 1 bis 3, wobei das Bestimmen (S22) des Parameters (J) der Schritte a) und/oder b) aufweist:
Messen eines Antriebstroms (I) oder einer Antriebskraft während zumindest einer der Beschleunigungsphasen (Ta) des Bewegungszyklus, wobei der Bewegungszyklus eine Phase (Ta1, Ta3) mit einer positiven Beschleunigung (a) und eine Phase (Ta2, Ta4) mit einer negativen Beschleunigung umfasst; und
Bestimmen (S22) des Parameters (J) basierend auf dem gemessenen Antriebsstrom (I) oder auf der gemessenen Antriebskraft,

5. Verfahren nach Anspruch 4, wobei der Antriebsstrom (I) oder die Antriebskraft für jede der Beschleunigungsphasen (Ta) des Bewegungszyklus gemessen wird, insbesondere wenn die Beschleunigungsphasen zeitlich so kurz sind, dass die jeweilige Parameterbestimmung (S22) ungenau wäre, wobei die Parameterbestimmung (S22) für jede der Beschleunigungsphasen (Ta) erfolgt, wobei der jeweils bestimmte Parameter (J) anschließend gemittelt wird und wobei der entsprechende Mittelwert den gesamten jeweiligen Bewegungszyklus repräsentiert,

6. Verfahren nach Anspruch 4, wobei der Antriebsstrom (I) oder die Antriebskraft für jede der Beschleunigungsphasen (Ta) des Bewegungszyklus gemessen wird, insbesondere wenn die Beschleunigungsphasen (Ta) zeitlich ausreichend lang sind, so dass Überschwinger bei der Parameterbestimmung (S22) unbeachtlich sind, wobei die Parameterbestimmung (S22) für jede der Beschleunigungsphasen (Ta) erfolgt und wobei die jeweils für die Beschleunigungsphasen (Ta) bestimmten Parameter miteinander verglichen werden.

7. Verfahren nach einem der Ansprüche 1 bis 6, wobei der Schritt a) durchgeführt wird, indem eine Bedienperson den Sollwert (Jsoll) in das Koordinatenmessgerät (10) eingibt.

8. Verfahren nach einem der Ansprüche 1 bis 7, wobei die Fehlermeldung veranlasst: eine Notausschaltung des Koordinatenmessgeräts (10); einen sofortigen Abbruch einer aktuellen Bewegung des Objekts; eine Herabsetzung einer Bewegungsgeschwindigkeit (v, w); und/oder eine Ausgabe einer Bedienperson-Warnung.

9. Verfahren nach einem der Ansprüche 1 bis 8, wobei das Objekt ein jeweils zu vermessendes Werkstück (32) und/oder eine Werkstückaufnahme, insbesondere eine Planscheibe, umfasst und wobei das Objekt translatorisch oder rotatorisch bewegt wird.

10. Verfahren nach einem der Ansprüche 1 bis 9, wobei jeder der erneut bestimmten Parameter in einer Parameter-Historie hinterlegt wird und mit den bereits hinterlegten Parametern verglichen wird, um im Falle einer Abweichung die Fehlermeldung auszugeben.

11. Koordinatenmessgerät (10) mit:
einer Basis (12);
einem Sensor zum Erfassen eines zu vermessenden Objekts (32), wobei das Objekt (32) zwischen verschiedenen Positionen bewegt wird, wobei das Objekt an jeder der Positionen vorzugsweise zumindest kurzzeitig in Ruhe ist;
einer Werkstückaufnahme;
einem Speicher (46, 48), wo ein Parameter (J), nämlich ein Trägheitsmoment oder eine Masse, hinterlegbar ist, der ein Maß für eine Bewegungsenergie des Objekts darstellt; und
einer Steuerung (36), die zum Durchführen der folgenden Schritte eingerichtet ist:
a) initiales Bestimmen des Parameters und Festlegen des initial bestimmten Parameters als Sollwert;
b) Bewegen des Objekts von einer Position zu einer nächsten Position und erneutes Bestimmen des Parameters für einen Bewegungszyklus zwischen den entsprechenden Positionen;
c) Festlegen des erneut bestimmten Parameters als Istwert;
d) Vergleichen des Sollwerts mit dem Istwert;
e) Fortfahren mit der Bewegung des Objekts, wenn der Vergleich ergibt, dass der Istwert im Wesentlichen mit dem Sollwert übereinstimmt, und Zurückkehren zum Schritt b), so lange eine letzte Position nicht erreicht ist; oder
f) Ausgeben einer Fehlermeldung, wenn der Vergleich ergibt, dass der Istwert wesentlich vom Sollwert abweicht.

## Claims

1. Method (100) for reliably monitoring a parameter of a coordinate measuring machine (10), to be specific a mass moment of inertia (J) or a mass (m) required for determining a kinetic energy of an object that can be measured by means of a sensor (28) of the coordinate measuring machine (10), the object being moved between various positions, with the object preferably being at least briefly at rest in each of the positions (P), the method (100) comprising the steps of:
a) initially determining (S12) the parameter and setting (S14) the initially determined parameter as the target value (Jsoll);
b) moving (S20) the object from one position (P) to a next position (P) and re-determining the parameter (J) for a movement cycle between the corresponding positions (P);
c) setting (S22) the re-determined parameter as the actual value (Jist);
d) comparing (S24-2) the target value (Jsoll) with the actual value (Jist);
e) continuing the movement of the object if the comparison (S24-2) finds that the actual value (Jist) substantially coincides with the target value (Jsoll), and returning to step b) if a last position (P) has not been reached; or
f) outputting (S26) an error message if the comparison (S24-2) finds that the actual value (Jist) deviates significantly from the target value (Jsoll).

2. Method according to Claim 1, which also comprises the steps of:
selecting a parameter range (I, II, III, IV) that comprises an expected parameter value by an operator of the coordinate measuring device (10) from a multiplicity of parameter ranges before step b) is carried out, an entirety of all the parameter ranges comprising each parameter value that is theoretically possible and permissible in practice, and the selecting step preferably being performed by actuating a selection switch (50) of the coordinate measuring machine (10).

3. Method according to Claim 2, it also being checked whether the actual value (Jist) lies within the selected parameter range (I, II, III, IV), and a further error message being output (S26) if the actual value (Jist) does not lie within the selected parameter range (I, II, III, IV).

4. Method according to one of Claims 1 to 3, the determination (S22) of the parameter (J) of steps a) and/or b) comprising:
measuring a drive current (I) or a drive force during at least one of the acceleration phases (Ta) of the movement cycle, the movement cycle comprising a phase (Ta1, Ta3) with a positive acceleration (a) and a phase (Ta2, Ta4) with a negative acceleration; and
determining (S22) the parameter (J) on the basis of the measured drive current (I) or on the basis of the measured drive force.

5. Method according to Claim 4, the drive current (I) or the drive force for each of the acceleration phases (Ta) of the movement cycle being measured, in particular if the acceleration phases are of such a short time that the respective parameter determination (S22) would be inaccurate, with the parameter determination (S22) being performed for each of the acceleration phases (Ta), the respectively determined parameter (J) subsequently being averaged and the corresponding average value representing the entire respective movement cycle.

6. Method according to Claim 4, the drive current (I) or the drive force for each of the acceleration phases (Ta) of the movement cycle being measured, in particular if the acceleration phases (Ta) are of a sufficiently long time, so that overshoots are inconsequential in the parameter determination (S22), with the parameter determination (S22) being performed for each of the acceleration phases (Ta) and the parameters that are respectively determined for the acceleration phases (Ta) being compared with one another.

7. Method according to one of Claims 1 to 6, step a) being carried out by an operator inputting the target value (Jsoll) into the coordinate measuring machine (10).

8. Method according to one of Claims 1 to 7, the error message causing: an emergency shutdown of the coordinate measuring machine (10); an immediate termination of a movement of the object occurring at that time; a reduction of a speed of movement (v, w); and/or an output of an operator warning.

9. Method according to one of Claims 1 to 8, the object comprising a workpiece (32) that is respectively to be measured and/or a workpiece holder, in particular a face plate, and the object being moved translationally or rotationally.

10. Method according to one of Claims 1 to 9, each of the re-determined parameters being stored in a parameter history and compared with the already stored parameters, in order to output the error message in the event of a deviation.

11. Coordinate measuring machine (10) with:
a base (12);
a sensor for sensing an object (32) to be measured, the object (32) being moved between various positions, with the object preferably being at least briefly at rest in each of the positions;
a workpiece holder;
a memory (46, 48), where a parameter (J), to be specific a moment of inertia or a mass,
that represents a measure of a kinetic energy of the object can be stored; and
a controller (36), which is designed for carrying out the following steps:
a) initially determining the parameter and setting the initially determined parameter as the target value;
b) moving the object from one position to a next position and re-determining the parameter for a movement cycle between the corresponding positions;
c) setting the re-determined parameter as the actual value;
d) comparing the target value with the actual value;
e) continuing the movement of the object if the comparison finds that the actual value substantially coincides with the target value, and returning to step b) if a last position has not been reached; or
f) outputting an error message if the comparison finds that the actual value deviates significantly from the target value.

## Revendications

1. Procédé (100) de surveillance fiable d'un paramètre d'un appareil de mesure de coordonnées (10), notamment d'un moment d'inertie de masse (J) ou d'une masse (m) nécessaire à la détermination d'une énergie cinétique d'un objet pouvant être mesuré au moyen d'un capteur (28) de l'appareil de mesure de coordonnées (10), l'objet étant déplacé entre différentes positions, l'objet s'arrêtant dans chacune des positions (P) de préférence au moins brièvement, le procédé (100) comprenant les étapes de :
a) détermination initiale (S12) du paramètre et établissement (S14) du paramètre déterminé initialement comme une valeur théorique (Jsoll) ;
b) déplacement (S20) de l'objet d'une position (P) à une position suivante (P) et nouvelle détermination du paramètre (J) pour un cycle de déplacement entre les positions correspondantes (P) ;
c) établissement (S22) du paramètre déterminé de nouveau comme une valeur effective (Jist) ;
d) comparaison (S24-2) de la valeur théorique (Jsoll) à la valeur effective (Jist) ;
e) continuation du déplacement de l'objet si la comparaison (S24-2) indique que la valeur effective (Jist) coïncide substantiellement avec la valeur théorique (Jsoll), et retour à l'étape b) tant qu'une dernière position (P) n'a pas été atteinte ; ou
f) émission (S26) d'un message d'erreur si la valeur (S24-2) indique que la valeur effective (Jist) diffère substantiellement de la valeur théorique (Jsoll).

2. Procédé selon la revendication 1, comprenant en outre l'étape de :
sélection d'une plage de paramètres (I, II, III, IV), qui comprend une valeur de paramètre attendue, par un opérateur de l'appareil de mesure de coordonnées (10), parmi une pluralité de plages de paramètres, avant l'exécution de l'étape b), l'ensemble de toutes les plages de paramètres comprenant chaque valeur de paramètre théoriquement possible et admissible dans la pratique, et l'étape de sélection étant effectuée de préférence par l'actionnement d'un sélecteur (50) de l'appareil de mesure de coordonnées (10).

3. Procédé selon la revendication 2, dans lequel il est vérifié en outre si la valeur effective (Jist) est comprise dans la plage de paramètres sélectionnée (I, II, III, IV), et dans lequel un message d'erreur supplémentaire est émis (S26) si la valeur effective (Jist) n'est pas comprise dans la plage de paramètres (I, II, III, IV) sélectionnée.

4. Procédé selon l'une quelconque des revendications 1 à 3, dans lequel la détermination (S22) du paramètre (J) des étapes a) et/ou b) comprend :
la mesure d'un courant d'entraînement (I) ou d'une force d'entraînement pendant au moins l'une des phases d'accélération (Ta) du cycle de déplacement, le cycle de déplacement comprenant une phase (Ta1, Ta3) avec une accélération positive (a) et une phase (Ta2, Ta4) avec une accélération négative ; et
la détermination (S22) du paramètre (J) sur la base du courant d'entraînement mesuré (I) ou de la force d'entraînement mesurée.

5. Procédé selon la revendication 4, dans lequel le courant d'entraînement (I) ou la force d'entraînement est mesuré(e) pour chacune des phases d'accélération (Ta) du cycle de déplacement, en particulier si les phases d'accélération ont une durée tellement courte que la détermination de paramètre respective (S22) serait imprécise, la détermination de paramètre (S22) étant effectuée pour chacune des phases d'accélération (Ta), le paramètre (J) respectivement déterminé étant ensuite moyenné, et la moyenne correspondante représentant le cycle de déplacement respectif entier.

6. Procédé selon la revendication 4, dans lequel le courant d'entraînement (I) ou la force d'entraînement est mesuré(e) pour chacune des phases d'accélération (Ta) du cycle de déplacement, en particulier si les phases d'accélération (Ta) ont une durée suffisamment longue pour que des suroscillations soient négligeables lors de la détermination de paramètre (S22), la détermination de paramètre (S22) étant effectuée pour chacune des phases d'accélération (Ta), et les paramètres respectivement déterminés pour les phases d'accélération (Ta) étant comparés les uns aux autres.

7. Procédé selon l'une quelconque des revendications 1 à 6, dans lequel l'étape a) est effectuée en ce qu'un opérateur saisit la valeur théorique (Jsoll) sur l'appareil de mesure de coordonnées (10).

8. Procédé selon l'une quelconque des revendications 1 à 7, dans lequel le message d'erreur provoque : un arrêt d'urgence de l'appareil de mesure de coordonnées (10) ; une interruption immédiate du déplacement actuel de l'objet ; une diminution d'une vitesse de déplacement (v, w) ; et/ou une émission d'un avertissement pour l'opérateur.

9. Procédé selon l'une quelconque des revendications 1 à 8, dans lequel l'objet comprend une pièce à travailler (32) à mesurer respectivement et/ou un logement de pièce à travailler, en particulier un plateau porte-outil, et l'objet étant déplacé en translation ou en rotation.

10. Procédé selon l'une quelconque des revendications 1 à 9, dans lequel chacun des paramètres déterminés de nouveau est enregistré dans un historique de paramètres et comparé aux paramètres déjà enregistrés afin d'émettre un message d'erreur en cas de différence.

11. Appareil de mesure de coordonnées (10), comprenant :
une base (12) ;
un capteur pour détecter un objet à mesurer (32), l'objet (32) étant déplacé entre différentes positions, l'objet s'arrêtant à chacune des positions de préférence au moins brièvement ;
un logement de pièce à travailler ;
une mémoire (46, 48) dans laquelle un paramètre (J), notamment un moment d'inertie ou une masse, peut être enregistré qui représente une mesure d'une énergie cinétique de l'objet ; et
une unité de commande (36) aménagée pour exécuter les étapes suivantes :
a) la détermination initiale du paramètre et l'établissement du paramètre déterminé initialement comme une valeur théorique ;
b) le déplacement de l'objet d'une position à une position suivante et la nouvelle détermination du paramètre pour un cycle de déplacement entre les positions correspondantes ;
c) l'établissement du paramètre déterminé de nouveau comme une valeur effective ;
d) la comparaison de la valeur théorique à la valeur effective ;
e) la continuation du déplacement de l'objet si la comparaison indique que la valeur effective coïncide substantiellement avec la valeur théorique, et le retour à l'étape b) tant qu'une dernière position n'a pas été atteinte ; ou
f) l'émission d'un message d'erreur si la valeur indique que la valeur effective diffère substantiellement de la valeur théorique.
